# FASCICULE DE BREVET EUROPEEN

(11) **EP 2 401 234 B1**
(45) Date de publication et mention de la délivrance du brevet: **17.04.2013**
(21) Numéro de dépôt: 10709896.4
(22) Date de dépôt: 22.02.2010
(51) Int. Cl.: C03C 3/087, C03C 4/00

(54) **FEUILLE DE VERRE**
GLASSCHEIBE
GLASS SHEET

(30) Priorité: 27.02.2009 FR 0951242
(43) Date de publication de la demande: 04.01.2012
(73) Titulaire: Saint-Gobain Glass France, 92400 Courbevoie (FR)
(72) Inventeur: SACHOT, Dominique, F-77330 Ozoir La Ferriere (FR); CINTORA, Octavio, F-95150 Taverny (FR); MARIO, Olivier, F-75017 Paris (FR)
(74) Mandataire: Teyssedre, Laurent
(86) Numéro de dépôt international: PCT/FR2010/050298
(87) Numéro de publication internationale: WO 2010/097538

(56) Documents cités:
- EP-A- 1 245 544
- US-A1- 2007 209 698

## Description

L'invention se rapporte au domaine des feuilles de verre, planes ou bombées. Plus précisément, l'invention concerne des compositions de verre et un procédé d'obtention de feuilles de verre.

Les feuilles de verre sont utiles dans de nombreuses applications : vitrages pour le bâtiment ou l'automobile, production d'énergie, notamment systèmes photovoltaïques ou miroirs pour la concentration d'énergie solaire, écrans de visualisation...

Pour la plupart de ces applications, l'homogénéité chimique du verre est une caractéristique primordiale. La présence d'hétérogénéités est en effet susceptible de créer des défauts optiques. Ces hétérogénéités peuvent être des inclusions gazeuses (bulles, « puces ») ou solides (« pierres », infondus), ou des zones de composition chimique différente (certaines sont qualifiées de « cordes » dans le métier). Quelle que soit l'application, la présence de défauts optiques est à éviter, et les procédés d'élaboration du verre s'efforcent de limiter ce risque.

Les feuilles de verre sont généralement produites de la manière suivante : des matières premières pulvérulentes, naturelles (sable, calcaire, dolomie, feldspaths...) ou issues de l'industrie chimique (carbonate de sodium), sont introduites dans un four chauffé à l'aide d'au moins un brûleur généralement aérien ou à l'aide de résistances plongées dans le bain de verre. Sous l'effet de la chaleur, des réactions de fusion et des réactions chimiques entre les différents composants des matières premières vont former un bain de verre fondu. L'homogénéisation du bain de verre se fait alors selon plusieurs mécanismes. Généralement un affinant est introduit avec les matières premières. Il s'agit d'un composé chimique, ou d'un mélange de composés, par exemple du sulfate de sodium ou de calcium (gypse), qui vont générer un dégagement gazeux au sein du bain de verre. Ce dégagement gazeux aide à homogénéiser localement le verre en facilitant la digestion des grains de silice résiduels et l'évacuation des gaz piégés dans le bain de verre. De puissants mouvements de thermoconvection dus à la différence de température entre la surface du verre et la sole du four aident également à homogénéiser le verre. Parfois des moyens mécaniques sont mis en place, tels que des agitateurs ou des bouillonneurs générant des bulles de gaz au sein du bain de verre.

Les verres à forte transmission lumineuse et énergétique, appelés souvent verres « extra-clairs » ou « ultra-clairs » sont particulièrement difficiles à homogénéiser. Ces verres contiennent de faibles quantités d'oxyde de fer, et notamment de faibles quantités de fer ferreux (Fe²⁺). De ce fait, l'absorption du rayonnement des flammes par le verre est particulièrement faible, dont il résulte une faible différence de température entre la surface du verre et la sole du four et donc des mouvements de convection d'intensité réduite. En outre, le verre est souvent affiné à l'aide de sulfate (de sodium ou de calcium) et de réducteur tel que le coke. Par son effet sur le sulfate à relativement basse température, le réducteur assiste grandement l'affinage et l'homogénéisation du bain de verre dès les premières étapes de la fusion. Or la présence de réducteurs est préjudiciable pour la production de verres extra-clairs, car elle conduit à une forte proportion de fer ferreux, lequel absorbe le rayonnement lumineux pour des longueurs d'ondes situées dans le visible et le proche infrarouge et diminue donc la transmission du produit final.

Le brevet US 2007/0209698 divulgue un verre dit "float" présentant une faible teneur en fer et une transmission élevée, pour des applications dans le domaine du photovoltaïque et une méthode de fabrication du dit verre. La composition de base du dit verre est la suivante, exprimée en pourcentages pondéraux, SiO₂ 67-75 %, Na₂O 10-20 %, CaO 5-15 %, MgO 0-7 %, Al₂O₃ 0-5 % et K₂O 0-5 %. La teneur pondérale totale en fer, exprimée en Fe₂O₃, est comprise entre 0.001 et 0.01 % et la transmission dans le visible est d'au moins 90 %.

Les inventeurs ont maintenant trouvé une solution au problème de l'homogénéisation des verres à forte transmission lumineuse et énergétique.

L'invention a pour objet une feuille de verre dont la transmission lumineuse est supérieure ou égale à 89% pour une épaisseur de 3,2 mm, et dont la composition chimique comprend de l'oxyde de bismuth en une teneur pondérale comprise entre 0,05 et 1%. La composition chimique de la feuille de verre est de type silico-sodo-calcique et comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0 |

ainsi que de l'oxyde de fer en une teneur pondérale, exprimée en Fe₂O₃, comprise entre 0,005% et 0,05%.

Au sens de l'invention, la transmission lumineuse, souvent abrégée « T_{L} », est calculée entre 380 et 780 mm et ramenée à une épaisseur de verre de 3,2 mm, en prenant en considération l'illuminant D65 tel que défini par la norme ISO/CIE 10526 et l'observateur de référence colorimétrique C.I.E. 1931 tel que défini par la norme ISO/CIE 10527.

Les inventeurs ont en effet mis en évidence que l'ajout d'oxyde de bismuth dans les teneurs revendiquées permettait d'améliorer l'homogénéité chimique des verres, particulièrement des verres à forte transmission lumineuse. De ce fait les verres obtenus présentent une transmission lumineuse ou énergétique plus élevée, ce qui est particulièrement appréciable pour les verres utilisés dans le domaine du photovoltaïque ou des miroirs pour la concentration d'énergie solaire. Le mécanisme d'action du bismuth est totalement inconnu et incompris.

La feuille de verre selon l'invention présente une composition chimique de type silico-sodo-calcique, pour des questions de facilité de fusion et de mise en oeuvre.

On entend par composition de type silico-sodo-calcique une composition comprenant de la silice (SiO₂) comme oxyde formateur et des oxydes de sodium (soude Na₂O) et de calcium (chaux CaO). Cette composition comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0. |

La feuille de verre selon l'invention est de préférence telle que sa transmission lumineuse est supérieure ou égale à 90%, notamment 90,5%, voire 91%, pour une épaisseur de 3,2 mm.

La feuille de verre selon l'invention est de préférence telle que sa transmission énergétique (T_{E}) calculée selon la norme ISO 9050 (masse d'air 1,5) est supérieure ou égale à 90%, notamment 90,5%, voire 91%, pour une épaisseur de 3,2 mm.

La composition chimique de la feuille de verre selon l'invention comprend de l'oxyde de fer, en une teneur pondérale, exprimée en Fe₂O₃, comprise entre 0,005% et 0,05%, notamment entre 0,007% et 0,02%. De telles teneurs permettent d'atteindre de fortes transmissions lumineuses. Des teneurs plus faibles que 0,005% sont toutefois difficiles à obtenir car elles supposent une purification très poussée, et donc coûteuse, des matières premières.

La présence de fer dans une composition de verre peut résulter des matières premières, en tant qu'impuretés, ou d'un ajout délibéré visant à colorer le verre. Il est connu que le fer existe dans la structure du verre sous la forme d'ions ferriques (Fe³⁺) et d'ions ferreux (Fe²⁺). La présence d'ions Fe³⁺ confère au verre une très légère coloration jaune et permet d'absorber les radiations ultraviolettes. La présence d'ions Fe²⁺ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse.

La composition de la feuille de verre selon l'invention est de préférence telle que le rédox est inférieur ou égal à 0,4, notamment 0,3, et même 0,2 ou 0,1. Le rédox du verre est défini au sens de la présente invention comme étant le rapport entre la teneur pondérale en oxyde de fer ferreux (exprimé en FeO) et la teneur pondérale en oxyde de fer total (exprimée en Fe₂O₃). Les faibles rédox permettent en effet d'augmenter la transmission énergétique du verre.

Pour atteindre ces faibles rédox et/ou ces fortes transmissions énergétiques, différents moyens sont possibles. La feuille de verre selon l'invention peut notamment contenir de l'oxyde de tungstène WO₃ en une teneur pondérale comprise entre 0,1 et 2%, tel qu'enseigné dans la demande FR 2921356. Elle peut également contenir de l'oxyde de potassium en une teneur pondérale comprise entre 1,5 et 10%, tel qu'enseigné dans la demande FR 2921357.

La composition chimique de la feuille de verre selon l'invention comprend de préférence de l'oxyde de bismuth en une teneur pondérale comprise entre 0,1 et 0,5%, notamment entre 0,1% et 0,3%. Au-delà de 0,5%, il semble que l'ajout d'oxyde de bismuth ne procure qu'un effet limité, comme s'il existait un phénomène de saturation.

La feuille de verre selon l'invention est de préférence plane ou courbée. Elle est avantageusement courbée selon une forme cylindro-parabolique lorsqu'elle est destinée à être utilisée pour la fabrication de miroirs paraboliques pour la concentration d'énergie solaire. La feuille de verre selon l'invention peut être de toute dimension, généralement comprise entre 0,5 et 6 mètres. Son épaisseur est généralement comprise entre 1 et 10 mm.

La composition de verre peut comprendre, outre les impuretés inévitables contenues notamment dans les matières premières, une faible proportion (jusqu'à 1 %) d'autres constituants, par exemple des agents aidant à la fusion ou l'affinage du verre (SO₃, Cl...), ou encore des éléments provenant de la dissolution des réfractaires servant à la construction des fours (par exemple ZrO₂). La composition selon l'invention ne comprend de préférence pas d'oxydes tels que Sb₂O₃, As₂O₃ ou CeO₂. De préférence, la teneur en MoO₃ est nulle.

La composition de la feuille de verre selon l'invention ne comprend de préférence aucun agent absorbant les rayonnements visibles ou infrarouges (notamment pour une longueur d'ondes comprise entre 380 et 1000 nm) autre que ceux déjà cités. En particulier, la composition selon l'invention ne contient de préférence pas d'agents choisis parmi les agents suivants, ou aucun des agents suivants : les oxydes d'éléments de transition tels que CoO, CuO, Cr₂O₃, MnO₂, les oxydes de terres rares tels que CeO₂, La₂O₃, Nid₂O₃, ou encore les agents colorants à l'état élémentaire tels que Se, Ag, Cu, Au. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre. Pour certaines applications, notamment en ameublement, il est toutefois possible d'ajouter une très faible quantité d'oxyde colorant, notamment de l'oxyde de cobalt en une teneur inférieure à 1 ppm, pour conférer une légère coloration visible au niveau de la tranche du verre. La composition chimique de la feuille de verre selon l'invention ne comprend donc de préférence pas d'or ou d'argent.

L'invention a également pour objet un procédé d'obtention d'une feuille de verre selon l'invention, comprenant une étape de fusion dans laquelle on introduit un composé précurseur de l'oxyde de bismuth.

Ce composé peut par exemple être de l'oxyde de bismuth Bi₂O₃ ou un précurseur comme la bismutite ((BiO)₂CO₃), ou le nitrate de bismuth (Bi(NO₃)₃).

La fusion peut être réalisée en fours continus, chauffés à l'aide d'électrodes et/ou à l'aide de brûleurs, aériens et/ou immergés et/ou disposés dans la voûte du four de manière à ce que la flamme vienne impacter les matières premières ou le bain de verre. Les matières premières sont généralement pulvérulentes et comprennent des matières naturelles (sable, feldspaths, calcaire, dolomie, syénite néphélinique...) ou artificielles (carbonate de sodium ou de potassium, anhydride borique, sulfate de sodium...). Les matières premières sont enfournées puis subissent des réactions de fusion au sens physique du terme et diverses réactions chimiques conduisant à l'obtention d'un bain de verre. Le verre en fusion est ensuite acheminé vers une étape de formage pendant laquelle la feuille de verre va prendre sa forme. Le formage peut être réalisé par différentes méthodes, comme le flottage (dans lequel le verre est déversé sur un bain d'étain fondu), le laminage, l'étirage... Le procédé de laminage, dans lequel le verre passe entre des rouleaux lamineurs, est particulièrement utile pour former des reliefs en surface du verre. La feuille de verre peut ensuite être découpée, façonnée, bombée, trempée...

La feuille de verre selon l'invention peut être revêtue sur au moins une de ses faces d'au moins une couche mince ou au moins un empilement apportant au moins une fonctionnalité supplémentaire : couche antireflets ou au contraire réfléchissante (par exemple couche d'argenture pour miroirs), couche conductrice (à base par exemple d'oxyde d'étain dopé au fluor ou à l'antimoine, ou d'oxyde de zinc dopé à l'aluminium ou au gallium, ou d'oxyde mixte d'indium et d'étain), couche bas-émissive ou antisolaire (à base par exemple d'argent, généralement protégé par d'autres couches), couche antisalissures ou autonettoyante (à base par exemple d'oxyde de titane, notamment cristallisé sous forme anatase). Si la feuille de verre est destinée à être utilisée dans des miroirs, notamment des miroirs pour la concentration d'énergie solaire, la feuille est revêtue d'une couche d'argent, laquelle est protégée contre l'oxydation par au moins une couche de peinture.

L'invention a enfin pour objet l'utilisation de la feuille de verre selon l'invention dans des cellules photovoltaïques, cellules solaires, miroirs plans ou paraboliques pour la concentration d'énergie solaire, ou encore des diffuseurs pour rétro-éclairage d'écrans de visualisation du type LCD (écrans à cristaux liquides). La feuille de verre selon l'invention peut également être employée pour des applications intérieures (cloisons, ameublement...) ou dans l'électroménager (tablettes de réfrigérateurs...). Elle peut encore être employée dans des écrans ou lampes planes à base de diodes électroluminescentes organiques.

D'une manière générale, l'invention a aussi pour objet une cellule photovoltaïque, une cellule solaire, un miroir plan ou parabolique pour la concentration d'énergie solaire, ou encore un diffuseur pour rétro-éclairage d'écrans de visualisation du type LCD comprenant au moins une feuille de verre selon l'invention.

Dans le cas des applications dans le domaine du photovoltaïque, et afin de maximiser le rendement énergétique de la cellule, plusieurs améliorations peuvent être apportées, cumulativement ou alternativement :
- la feuille de verre peut avantageusement être revêtue d'au moins une couche mince transparente et électroconductrice, par exemple à base de SnO₂:F, SnO₂:Sb, ZnO:Al, ZnO:Ga. Ces couches peuvent être déposées sur le substrat par différents procédés de dépôt, tels que le dépôt chimique en phase vapeur (CVD) ou le dépôt par pulvérisation cathodique, notamment assisté par champ magnétique (procédé magnétron). Dans le procédé CVD, des précurseurs halogénures ou organométalliques sont vaporisés et transportés par un gaz vecteur jusqu'à la surface du verre chaud, où ils se décomposent sous l'effet de la chaleur pour former la couche mince. L'avantage du procédé CVD est qu'il est possible de le mettre en oeuvre au sein du procédé de formage de la feuille de verre, notamment lorsqu'il s'agit d'un procédé de flottage. Il est ainsi possible de déposer la couche au moment où la feuille de verre est sur le bain d'étain, à la sortie du bain d'étain, ou encore dans l'étenderie, c'est-à-dire au moment où la feuille de verre est recuite afin d'éliminer les contraintes mécaniques. La feuille de verre revêtue d'une couche transparente et électroconductrice peut être à son tour revêtue d'un semi-conducteur à base de silicium amorphe ou polycristallin, de chalcopyrites (notamment du type CIS - CuInSe₂) ou de CdTe pour former une cellule photovoltaïque. Il peut notamment s'agir d'une deuxième couche mince à base de silicium amorphe, de CIS ou de CdTe. Dans ce cas, un autre avantage du procédé CVD réside en l'obtention d'une rugosité plus forte, qui génère un phénomène de piégeage de la lumière, lequel augmente la quantité de photons absorbée par le semi-conducteur.
- La feuille de verre peut être revêtue sur au moins une de ses faces d'un revêtement antireflets. Ce revêtement peut comprendre une couche (par exemple à base de silice poreuse à bas indice de réfraction) ou plusieurs couches : dans ce dernier cas un empilement de couches à base de matériau diélectrique alternant des couches à bas et haut indices de réfraction et se terminant par une couche à bas indice de réfraction est préféré. Il peut notamment s'agir d'un empilement décrit dans la demande WO 01/94989 ou WO 2007/077373. Le revêtement antireflet peut également comprendre en dernière couche une couche autonettoyante et antisalissure à base d'oxyde de titane photocatalytique, tel qu'enseigné dans la demande WO 2005/110937. On peut ainsi obtenir une faible réflexion durable dans le temps. Dans des applications dans le domaine du photovoltaïque, le revêtement antireflet est disposé en face externe, c'est-à-dire la face en contact avec l'atmosphère, tandis que l'éventuelle couche transparente électroconductrice est disposée en face interne, du côté du semi-conducteur.
- la surface de la feuille de verre peut être texturée, par exemple présenter des motifs (notamment en pyramide), tel que décrit dans les demandes WO 03/046617, WO 2006/134300, WO 2006/134301 ou encore WO 2007/015017. Ces texturations sont en général obtenues à l'aide d'un formage du verre par laminage.

La présente invention sera mieux comprise à la lecture de la description détaillée ci-après d'exemples de réalisation non limitatifs.

Le tableau 1 ci-après indique la composition chimique de feuilles de verres comparatives (C1) et selon l'invention (1 et 2), et leurs propriétés optiques :
- la transmission énergétique (T_{E}) calculée selon la norme ISO 9050 (masse d'air 1,5),
- le facteur de transmission lumineuse globale (T_{L}), calculé entre 380 et 780 mm, en prenant en considération l'illuminant D65 tel que défini par la norme ISO/CIE 10526 et l'observateur de référence colorimétrique C.I.E. 1931 tel que défini par la norme ISO/CIE 10527.

Toutes les teneurs sont des teneurs pondérales.

**Tableau 1**

| | C1 | 1 | 2 |
|---|---|---|---|
| SiO₂ (%) | 71,79 | 71,59 | 71,39 |
| Al₂O₃ (%) | 0,8 | 0,8 | 0,8 |
| CaO (%) | 9,0 | 9,0 | 9,0 |
| MgO (%) | 4,0 | 4,0 | 4,0 |
| Na₂O (%) | 14,1 | 14,1 | 14,0 |
| Fe₂O₃ (%) | 0,01 | 0,01 | 0,01 |
| SO₃ (%) | 0,3 | 0,3 | 0,3 |
| Bi₂O₃ (%) | - | 0,2 | 0,5 |
| | | | |
| T_{E} (%) | 90,6 | 90,8 | 90,8 |
| T_{L} (%) | 90,8 | 91,1 | 91,1 |

L'analyse des spectres optiques montre que l'oxyde de bismuth n'a pas d'effet sur le rédox du verre, mais seulement sur les transmissions lumineuse et énergétique.

## Revendications

1. Feuille de verre dont la transmission lumineuse est supérieure ou égale à 89% pour une épaisseur de 3,2 mm en prenant en considération l'illuminant D65, et dont la composition chimique est de type silico-sodo-calcique et comprend les constituants suivants en une teneur variant dans les limites pondérales ci-après définies :
| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0 |
ainsi que de l'oxyde de bismuth en une teneur pondérale comprise entre 0,05 et 1% et de l'oxyde de fer en une teneur pondérale, exprimée en Fe₂O₃, comprise entre 0,005% et 0,05%.

2. Feuille de verre selon l'une des revendications précédentes, dont la composition chimique comprend de l'oxyde de fer en une teneur pondérale, exprimée en Fe₂O₃, comprise entre 0,007% et 0,02%.

3. Feuille de verre selon l'une des revendications précédentes, telle que le rédox est inférieur ou égal à 0,2, notamment 0,1.

4. Feuille de verre selon l'une des revendications précédentes, telle que la teneur pondérale en oxyde de bismuth est comprise entre 0,1 et 0,5%.

5. Feuille de verre selon l'une des revendications précédentes, qui contient de l'oxyde de tungstène WO₃ en une teneur pondérale comprise entre 0,1 et 2%.

6. Feuille de verre selon l'une des revendications précédentes, qui contient de l'oxyde de potassium en une teneur pondérale comprise entre 1,5 et 10%.

7. Feuille de verre selon l'une des revendications précédentes, telle que sa transmission lumineuse est supérieure ou égale à 90%, notamment 91%, pour une épaisseur de 3,2 mm, en prenant en considération l'illuminant D65.

8. Feuille de verre selon l'une des revendications précédentes, dont la composition chimique ne comprend pas d'or ou d'argent.

9. Feuille de verre selon l'une des revendications précédentes, qui est plane ou courbée, notamment selon une forme cylindro-parabolique.

10. Feuille de verre selon l'une des revendications précédentes, qui est revêtue sur au moins une de ses faces d'au moins une couche mince ou au moins un empilement apportant au moins une fonctionnalité supplémentaire, choisis parmi une couche antireflets, une couche réfléchissante, une couche conductrice, une couche bas-émissive ou antisolaire, une couche antisalissures ou autonettoyante.

11. Procédé d'obtention d'une feuille de verre selon l'une des revendications précédentes, comprenant une étape de fusion dans laquelle on introduit un composé précurseur de l'oxyde de bismuth.

12. Utilisation de la feuille de verre selon l'une des revendications de feuille de verre précédentes dans des cellules photovoltaïques, cellules solaires, miroirs plans ou paraboliques pour la concentration d'énergie solaire, ou encore des diffuseurs pour rétro-éclairage d'écrans de visualisation du type LCD (écrans à cristaux liquides).

13. Cellule photovoltaïque, cellule solaire, ou miroir plan ou parabolique pour la concentration d'énergie solaire, comprenant au moins une feuille de verre selon l'une des revendications 1 à 10.

## Claims

1. A glass sheet, the light transmission of which is greater than or equal to 89% for a thickness of 3.2 mm taking into consideration the illuminant D65, and which has a chemical composition of soda-lime-silica type and comprises the following constituents in contents varying within the weight limits defined below:
| | |
|---|---|
| SiO₂ | 60 - 75% |
| Al₂O₃ | 0 - 10% |
| B₂O₃ | 0 - 5%, preferably 0 |
| CaO | 5 - 15% |
| MgO | 0 - 10% |
| Na₂O | 5 - 20% |
| K₂O | 0 - 10% |
| BaO | 0 - 5%, preferably 0 |
and bismuth oxide in a weight content between 0.05 and 1%, and iron oxide in a weight content, expressed as Fe₂O₃, between 0.005% and 0.05%.

2. The glass sheet as claimed in one of the preceding claims, the chemical composition of which comprises iron oxide in a weight content, expressed as Fe₂O₃, between 0.007% and 0.02%.

3. The glass sheet as claimed in one of the preceding claims, such that the redox is less than or equal to 0.2, in particular 0.1.

4. The glass sheet as claimed in one of the preceding claims, such that the weight content of bismuth oxide is between 0.1 and 0.5%.

5. The glass sheet as claimed in one of the preceding claims, which contains tungsten oxide WO₃ in a weight content between 0.1 and 2%.

6. The glass sheet as claimed in one of the preceding claims, which contains potassium oxide in a weight content between 1.5 and 10%.

7. The glass sheet as claimed in one of the preceding claims, such that its light transmission is greater than or equal to 90%, in particular 91%, for a thickness of 3.2 mm, taking into consideration the illuminant D65.

8. The glass sheet as claimed in one of the preceding claims, the chemical composition of which does not comprise gold or silver.

9. The glass sheet as claimed in one of the preceding claims, which is flat or curved, in particular with a cylindro-parabolic shape.

10. The glass sheet as claimed in one of the preceding claims, which is coated on at least one of its faces with at least one thin layer or at least one multilayer providing at least one additional functionality, chosen from an antireflection layer, a reflective layer, a conductive layer, a low-emissivity or solar-protection layer, and an antifouling or self-cleaning layer.

11. A process for obtaining a glass sheet as claimed in one of the preceding claims, comprising a melting step in which a bismuth oxide precursor compound is introduced.

12. The use of the glass sheet as claimed in one of the preceding glass sheet claims in photovoltaic cells, solar cells, flat or parabolic mirrors for concentrating solar energy, or else diffusers for backlighting display screens of the LCD (liquid crystal display) type.

13. A photovoltaic cell, solar cell or flat or parabolic mirror for concentrating solar energy, comprising at least one glass sheet as claimed in one of claims 1 to 10.

## Patentansprüche

1. Glasscheibe, deren Lichtdurchlässigkeit bei einer Dicke von 3,2 mm und unter Berücksichtigung der Lichtart D65 größer oder gleich 89% ist und deren chemische Zusammensetzung vom Kalk-Natron-Typ ist und die folgenden Bestandteile in einem Gehalt umfasst, der innerhalb der nachfolgend angegebenen Gewichtsgrenzen variiert:
| | |
|---|---|
| SiO₂ | 60 bis 75 % |
| Al₂O₃ | 0 bis 10 % |
| B₂O₂ | 0 bis 5 %, vorzugsweise 0 |
| CaO | 5 bis 15 % |
| MgO | 0 bis 10 % |
| Na₂O | 5 bis 20 % |
| K₂O | 0 bis 10 % |
| BaO | 0 bis 5 %, vorzugsweise 0 |
sowie Wismutoxid mit einem Gewichtsgehalt, der zwischen 0,05 und 1 % enthalten ist, und Eisenoxid mit einem Gewichtsgehalt, der, ausgedrückt als Fe₂O₃, zwischen 0,005 % und 0,05 % enthalten ist.

2. Glasscheibe nach einem der vorhergehenden Ansprüche, deren chemische Zusammensetzung Eisenoxid mit einem Gewichtsgehalt umfasst, der, ausgedrückt als Fe₂O₃, zwischen 0,007 % und 0,02 % enthalten ist.

3. Glasscheibe nach einem der vorhergehenden Ansprüche, wobei das Redox-Verhältnis kleiner oder gleich 0,2, insbesondere 0,1, ist.

4. Glasscheibe nach einem der vorhergehenden Ansprüche, wobei der Gewichtsgehalt an Wismutoxid zwischen 0,1 und 0,5 % enthalten ist.

5. Glasscheibe nach einem der vorhergehenden Ansprüche, die Wolframoxid WO₃ mit einem Gewichtsgehalt enthält, der zwischen 0,1 und 2 % enthalten ist.

6. Glasscheibe nach einem der vorhergehenden Ansprüche, die Kaliumoxid mit einem Gewichtsgehalt enthält, der zwischen 1,5 und 10 % enthalten ist.

7. Glasscheibe nach einem der vorhergehenden Ansprüche, wobei ihre Lichtdurchlässigkeit bei einer Dicke von 3,2 mm und unter Berücksichtigung der Lichtart D65 größer oder gleich 90%, insbesondere 91%, ist.

8. Glasscheibe nach einem der vorhergehenden Ansprüche, wobei ihre chemische Zusammensetzung kein Gold oder Silber umfasst.

9. Glasscheibe nach einem der vorhergehenden Ansprüche, wobei sie flach oder, insbesondere in der Form eines Parabolzylinders, gewölbt ist.

10. Glasscheibe nach einem der vorhergehenden Ansprüche, wobei sie auf mindestens einer ihrer Flächen mit mindestens einer dünnen Schicht oder mindestens einem Stapel bedeckt ist, die oder der mindestens eine zusätzliche Funktionalität mitbringt und die oder der aus einer Antireflexschicht, einer Reflexionsschicht, einer leitfähigen Schicht, einer Schicht mit geringem Emissionsvermögen oder Sonnenschutzschicht, einer schmutzabweisenden oder selbstreinigenden Schicht ausgewählt ist.

11. Verfahren zur Herstellung einer Glasscheibe nach einem der vorhergehenden Ansprüche, das einen Schmelzschritt umfasst, in dem eine Verbindung eingeführt wird, die ein Vorprodukt des Wismutoxids ist.

12. Verwendung der Glasscheibe nach einem der vorhergehenden Glasscheibenansprüche in Photovoltaikzellen, Solarzellen, flachen oder parabolischen Spiegeln für die Konzentration von Sonnenenergie oder auch Diffusoren für die Rüclcbeleuchtung von Anzeigebildschinnen des Typs LCD (Flüssigkristallbildschirme).

13. Photovoltaikzelle, Solarzelle oder flacher oder parabolischer Spiegel zur Konzentration von Sonnenenergie, die/der mindestens eine Glasscheibe nach einem der Ansprüche 1 bis 10 umfasst.
